# EUROPÄISCHE PATENTSCHRIFT

(11) **EP 3 497 309 B1**
(45) Veröffentlichungstag und Bekanntmachung des Hinweises auf die Patenterteilung: **09.12.2020**
(21) Anmeldenummer: 17749708.8
(22) Anmeldetag: 09.08.2017
(51) Int. Cl.: F01N 3/021, F01N 3/035, F01N 3/10, F01N 9/00, F01N 11/00, F01N 3/30

(54) **DIAGNOSEVERFAHREN UND VORRICHTUNG ZUR ÜBERPRÜFUNG DER FUNKTIONSFÄHIGKEIT EINER KOMPONENTE ZUR ABGASNACHBEHANDLUNG**
DIAGNOSTIC METHOD AND DEVICE FOR CHECKING THE FUNCTIONALITY OF A COMPONENT FOR EXHAUST-GAS AFTERTREATMENT
PROCÉDÉ DE DIAGNOSTIC ET DISPOSITIF POUR CONTRÔLER LE BON FONCTIONNEMENT D'UN COMPOSANT POUR LE POST-TRAITEMENT DE GAZ D'ÉCHAPPEMENT

(30) Priorität: 11.08.2016 DE 102016114901
(43) Veröffentlichungstag der Anmeldung: 19.06.2019
(73) Patentinhaber: Volkswagen AG, 38440 Wolfsburg (DE)
(72) Erfinder: RIECHERT, Christian, 39179 Barleben (DE); WITTIG, Frank-Michael, 38112 Braunschweig (DE)
(74) Vertreter: Gulde & Partner
(86) Internationale Anmeldenummer: PCT/EP2017/070138
(87) Internationale Veröffentlichungsnummer: WO 2018/029230

(56) Entgegenhaltungen:
- EP-A2- 2 217 798
- DE-A1-102004 001 831
- DE-A1-102006 053 125
- US-A1- 2011 072 800
- US-A1- 2012 124 995

## Beschreibung

Die Erfindung betrifft ein Diagnoseverfahren zur Überprüfung der Funktionsfähigkeit einer Komponente zur Abgasnachbehandlung eines Verbrennungsmotors sowie eine Vorrichtung zur Durchführung eines solchen Diagnoseverfahrens.

Die aktuelle und eine zukünftig immer schärfer werdende Abgasgesetzgebung stellen hohe Anforderungen an motorische Rohemissionen und die Abgasnachbehandlung von Verbrennungsmotoren. Mit Einführung der nächsten Gesetzgebungsstufe EU6 wird für Ottomotoren ein Grenzwert für eine Partikelanzahl vorgeschrieben. Dies kann dazu führen, dass bei einigen Modellen der Einsatz eines Ottopartikelfilters nötig sein kann. Dieser Partikelfilter kann auch katalytisch beschichtet sein. Daneben treten Forderungen auf, dass die Funktion der Komponenten zur Abgasnachbehandlung durch eine On-Board-Diagnose kontinuierlich überwacht wird, um das Einhalten der Emissionsgrenzen nicht nur im Neuzustand, sondern auch im laufenden Fahrzeugbetrieb sicherzustellen.

Dabei wird insbesondere die Leistungsfähigkeit eines Drei-Wege-Katalysators durch die Messung der Sauerstoffspeicherfähigkeit sowie der Sauerstoffaustragungsfähigkeit beurteilt. Dazu wird der Verbrennungsmotor phasenweise gezielt mit einem überstöchiometrischen beziehungsweise unterstöchiometrischen Verbrennungsluftverhältnis betrieben, um die Sauerstoffspeicherfähigkeit beziehungsweise Sauerstoffaustragungsfähigkeit in den Drei-Wege-Katalysator beziehungsweise aus dem Drei-Wege-Katalysator zu ermitteln. Ferner kann über die On-Board-Diagnose die Funktionsfähigkeit der Lambdasonden zur Regelung des Verbrennungsluftverhältnisses getestet werden.

Für fremdgezündete Verbrennungsmotoren sind Abgasnachbehandlungssysteme bekannt, bei denen im Abgaskanal ein erster, motornaher Drei-Wege-Katalysator mit einem in Unterbodenlage des Kraftfahrzeugs befindlichen Vier-Wege-Katalysator, also einem Partikelfilter mit einer Drei-Wege-wirksamen Beschichtung, kombiniert wird.

Ferner sind Abgasnachbehandlungssysteme bekannt, bei denen stromaufwärts eines Partikelfilters eine Vorrichtung zur Sekundärlufteinbringung in den Abgaskanal vorgesehen ist, um eine Regeneration des Partikelfilters zu ermöglich, ohne den Verbrennungsmotor mit einem Sauerstoffüberschuss zu betreiben.

Aus der DE 10 2011 002 438 A1 ist ein Verfahren zur Bestimmung der Beladung eines Partikelfilters im Abgaskanal eines Verbrennungsmotors bekannt, wobei mittels einer Druckerhöhungseinrichtung stromaufwärts des Partikelfilters zusätzlich zum Abgasstrom ein weiterer Gasstrom in den Abgaskanal eingebracht wird, um einen höheren Volumenstrom durch den Partikelfilter zu leiten und somit eine größere Druckdifferenz beim Durchströmen des Partikelfilters zu erreichen, wobei der Druck vor dem Partikelfilter und nach dem Partikelfilter zur Beurteilung des Beladungszustands des Partikelfilters herangezogen wird. Dies erfolgt insbesondere dann, wenn die Differenzdruckmessung aufgrund geringer Abgasvolumina und eines geringen Abgasstromes unzureichend ist, um ohne zusätzlichen Gasstrom eine verlässliche Aussage über den Beladungszustand des Partikelfilters zu treffen.

Darüber hinaus ist aus der DE 10 2013 200 623 A1 ein Verfahren zur Überwachung eines Partikelfilters bekannt, welcher zusammen mit einer zur Stickoxidreduktion dienenden Abgasreinigungskomponente im Abgaskanal eines Verbrennungsmotors angeordnet ist, wobei in Strömungsrichtung des Abgases hinter der Abgasreinigungskomponente ein Gassensor angeordnet ist, mit dem die Stickoxid-Konzentration im Abgasstrom bestimmt werden kann. Dabei ist vorgesehen, dass anhand einer Änderung der Stickoxid-Konzentration nach der Abgasreinigungskomponente im Vergleich zur Stickoxid-Konzentration vor dem Partikelfilter auf die Funktionstüchtigkeit des Partikelfilters geschlossen wird.

Aus der EP 2 217 798 A2 ist ein Verbrennungsmotor mit einem Partikelfilter in der Abgasanlage bekannt, bei welchem ein Partikelfilter stromabwärts eines ersten Drei-Wege-Katalysators und stromaufwärts eines zweiten Drei-Wege-Katalysators angeordnet ist.

Aus der US 2011 / 072 800 A1 ist ein Verbrennungsmotor bekannt, bei welchem ein Partikelfilter in der Abgasanlage des Verbrennungsmotors stromabwärts eines Drei-Wege-Katalysators angeordnet ist. Dabei kann Sekundärluft in die Abgasanlage eingeblasen werden, um den zur Regeneration des Partikelfilters notwendigen Sauerstoff zur Verfügung zu stellen.

Die US 2012 / 124 995 A1 offenbart ein Verfahren zur Abgasnachbehandlung eines Verbrennungsmotors, bei welchem in der Abgasanlage ein Drei-Wege-Katalysator und stromabwärts des Drei-Wege-Katalysators ein Partikelfilter angeordnet ist. Zur Regeneration des Partikelfilters wird stromabwärts des Drei-Wege-Katalysators und stromaufwärts des Partikelfilters Sekundärluft in den Abgaskanal eingeblasen, um die im Rußfilter zurückgehaltenen Rußpartikel zu oxidieren und den Partikelfilter zu regenerieren

Ferner offenbaren DE 10 2004 001 831 A1 und DE 10 2006 053 125 A1 jeweils Diagnoseverfahren zur Überprüfung der Funktionsfähigkeit von Katalysatoren eines Verbrennungsmotors.

Der Erfindung liegt nun die Aufgabe zugrunde, ein Diagnoseverfahren vorzuschlagen, mit dem die Funktionsfähigkeit einer katalytischen Beschichtung eines Partikelfilters oder einer stromabwärts dieses Partikelfilters angeordneten Abgassonde geprüft werden kann.

Die Aufgabe wird durch ein erfindungsgemäßes Diagnoseverfahren zur Überprüfung der Funktionsfähigkeit einer Komponente zur Abgasnachbehandlung eines Verbrennungsmotors in einem Abgaskanal des Verbrennungsmotors gemäss dem unabhängigen Anspruch 1 gelöst, wobei die Komponente ein Partikelfilter mit einer katalytisch wirksamen Beschichtung ist und wobei der Partikelfilter im Abgaskanal stromabwärts eines Drei-Wege-Katalysators angeordnet ist, welches folgende Schritte umfasst:
- Betreiben des Verbrennungsmotors mit einem stöchiometrischen Verbrennungsluftverhältnis, wobei das Abgas des Verbrennungsmotors durch den Abgaskanal geleitet und die Komponente mit einem stöchiometrischen Abgas beaufschlagt wird,
- Beaufschlagung der Komponente mit einem überstöchiometrischen Abgas, wobei der Verbrennungsmotor mit einem stöchiometrischen Verbrennungsluftverhältnis betrieben wird und zusätzliche Sekundärluft stromabwärts des Drei-Wege-Katalysators und stromaufwärts des Partikelfilters in den Abgaskanal eingeblasen wird,
- Ermitteln einer Reaktion der Komponente auf ein überstöchiometrisches Abgas,
- Betreiben des Verbrennungsmotors mit einem unterstöchiometrischen Verbrennungsluftverhältnis, wobei sich an der Komponente ebenfalls ein unterstöchiometrisches Abgas einstellt,
- Ermitteln einer Reaktion der Komponente auf ein unterstöchiometrisches Abgas.

Durch ein erfindungsgemäßes Verfahren kann die Funktionsfähigkeit einer Komponente getestet werden, wobei der Verbrennungsmotor sein stöchiometrisches Verbrennungsluftverhältnis nur in der letzten Phase mit unterstöchiometrischem Betrieb verlassen muss. Dadurch ist auch während der Diagnose der Komponente eine optimale Abgasreinigung möglich, sodass die Schadstoffemissionen auch während eines Diagnosevorgangs niedrig gehalten werden können.

Durch die in den abhängigen Ansprüchen angegebenen Merkmale sind vorteilhafte Weiterentwicklungen und Verbesserungen des im unabhängigen Anspruch angegebenen Verfahrens möglich.

Erfindungsgemäß ist vorgesehen, dass die Komponente ein Partikelfilter mit einer katalytischen, vorzugsweise einer Drei-Wege-katalytischen, Beschichtung ist, wobei bei der Beaufschlagung des Partikelfilters mit einem überstöchiometrischen Abgas die Sauerstoffspeicherfähigkeit (OSC) des Partikelfilters bestimmt wird und beim unterstöchiometrischen Betrieb des Verbrennungsmotors eine Sauerstoffaustragungsfähigkeit (RSC) aus dem Partikelfilter bestimmt wird. Bei Verbrennungsmotoren kann es notwendig sein, dass im Abgaskanal ein Partikelfilter zur Filtration von Rußpartikeln aus dem Abgas des Verbrennungsmotors notwendig ist. Durch die Verschärfung der Abgasgesetzgebung kann es auch bei Ottomotoren notwendig sein, dass im Abgaskanal ein Partikelfilter angeordnet ist. Dafür sind speziell für Ottomotoren Partikelfilter entwickelt worden, welche zusätzlich eine Drei-Wege-katalytisch wirksame Beschichtung aufweisen. Solche Partikelfilter mit einer Drei-Wege-katalytisch wirksamen Beschichtung werden auch als Vier-Wege-Katalysatoren bezeichnet. Durch das erfindungsgemäße Verfahren ist eine Diagnose der Wirksamkeit der Beschichtung des Partikelfilters möglich, ohne dass durch eine Fettverstellung oder Magerverstellung des Verbrennungsmotors zusätzliche NOx-Emissionen auftreten, da der Verbrennungsmotor zur Erzeugung eines mageren Abgases weiterhin mit einem stöchiometrischen Verbrennungsluftverhältnis betrieben werden kann und der zusätzliche Sauerstoff durch die Sekundärlufteinbringung bereitgestellt wird.

Gemäß einer vorteilhaften Weiterentwicklung des Diagnoseverfahrens ist vorgesehen, dass die Sekundärluft solange in den Abgaskanal eingeblasen wird, bis an einer Sonde stromabwärts des Partikelfilters ein überstöchiometrisches Abgas gemessen wird. Zur Ermittlung der Sauerstoffspeicherfähigkeit des Partikelfilters ist es vorteilhaft, wenn stromabwärts des Partikelfilters eine Sonde vorgesehen ist, mit der ein Sauerstoffdurchbruch durch den Partikelfilter detektiert werden kann. Wird ein Sauerstoffdurchbruch durch den Partikelfilter detektiert, kann davon ausgegangen werden, dass die maximale Sauerstoffspeicherfähigkeit des Partikelfilters erreicht ist.

In einer weiteren Verbesserung des Verfahrens ist vorgesehen, dass der Verbrennungsmotor unmittelbar nach einem Detektieren eines Sauerstoffdurchbruchs stromabwärts des Partikelfilters auf einen Betrieb mit unterstöchiometrischem Verbrennungsluftverhältnis umgeschaltet wird. Ist eine maximale Sauerstoffspeicherfähigkeit des Partikelfilters erreicht und kommt es im Abgaskanal stromabwärts des Partikelfilters zu einem Sauerstoffdurchbruch, so kann eine Sauerstoffaustragungsfähigkeit aus dem Katalysator bestimmt werden, wenn der Verbrennungsmotor mit einem unterstöchiometrischen, fetten Verbrennungsluftgemisch betrieben wird. Dadurch ist der Partikelfilter für die Bestimmung der Sauerstoffaustragungsfähigkeit vorkonditioniert, da davon ausgegangen werden kann, dass zu Beginn der Messung zur Bestimmung der Sauerstoffaustragungsfähigkeit aus dem Partikelfilter die maximale Sauerstoffspeicherfähigkeit erreicht ist. Dadurch ist die Bestimmung der Sauerstoffaustragungsfähigkeit besonders einfach und besonders einfach mit weiteren Messungen vergleichbar.

Dabei ist mit Vorteil vorgesehen, dass die Sekundärlufteinbringung in den Abgaskanal gestoppt wird, sobald an der Sonde stromabwärts des Partikelfilters ein Sauerstoffdurchbruch ermittelt wird. Durch ein zeitgleiches Abstellen der Sekundärluft kann sichergestellt werden, dass das überstöchiometrische Verbrennungsluftverhältnis unter der Berücksichtigung der Sauerstoffspeicherfähigkeit weiterer Abgasnachbehandlungskomponenten wie dem Drei-Wege-Katalysator sich auch im Abgaskanal einstellt. Dabei ist es besonders vorteilhaft, wenn sich unmittelbar stromaufwärts des Partikelfilters eine weitere Abgassonde, insbesondere eine weitere Lambdasonde, befindet, mit der das Abgasluftverhältnis vor Eintritt in den Partikelfilter bestimmt werden kann.

In einer weiteren Verbesserung des Diagnoseverfahrens ist vorgesehen, dass eine Bewertung der Funktionsfähigkeit der katalytischen Beschichtung des Partikelfilters anhand einer Integration der Sauerstoffmassenströme während des Betriebs mit einem überstöchiometrischen Abgas und mit einem unterstöchiometrischen Abgas erfolgt. Durch eine Integration der Sauerstoffmassenströme, welche mit einem überstöchiometrischen Abgas beziehungsweise mit einem unterstöchiometrischen Abgas durch den Partikelfilter strömen, kann auf einfache Art und Weise die Sauerstoffspeicherfähigkeit beziehungsweise die Sauerstoffaustragungsfähigkeit aus dem Partikelfilter bestimmt werden. Somit kann in Abhängigkeit von den Abgasströmen und eine im Steuergerät des Verbrennungsmotors abgelegt vorgesehene Sauerstoffspeicherfähigkeit beziehungsweise Sauerstoffaustragungsfähigkeit auf die Funktionsfähigkeit des Partikelfilters geschlossen werden.

Gemäß einer bevorzugten Ausführungsform des Diagnoseverfahrens ist vorgesehen, dass der Partikelfilter vor dem Einbringen der Sekundärluft durch einen Betrieb des Verbrennungsmotors mit einem unterstöchiometrischen, fetten Verbrennungsluftverhältnis vorkonditioniert wird. Wird der Verbrennungsmotor vor dem Einbringen der Sekundärluft mit einem unterstöchiometrischen Verbrennungsluftverhältnis betrieben, so kann davon ausgegangen werden, dass kein Sauerstoff in der Drei-Wege-katalytisch wirksamen Beschichtung des Partikelfilters gespeichert ist. Somit kann durch die Vorkonditionierung eine bessere Vergleichbarkeit von Messungen zur Sauerstoffspeicherfähigkeit des Partikelfilters erreicht werden, da jeweils davon ausgegangen werden kann, dass zu Beginn der Messung kein Sauerstoff in dem Partikelfilter gespeichert ist.

Erfindungsgemäß wird ferner eine Vorrichtung zur Abgasnachbehandlung eines Verbrennungsmotors vorgeschlagen, welche einen Abgaskanal, einen im Abgaskanal angeordneten Drei-Wege-Katalysator, sowie einen in Strömungsrichtung eines Abgases des Verbrennungsmotors stromabwärts des Drei-Wege-Katalysators angeordneten Partikelfilter mit einer katalytischen wirksamen Beschichtung umfasst, sowie eine stromabwärts des Partikelfilter angeordnete Lambdasonde, wobei stromabwärts des Drei-Wege-Katalysators und stromaufwärts des Partikelfilters eine Einmündung einer Sekundärluftversorgung in den Abgaskanal des Verbrennungsmotors vorgesehen ist, sowie mit einem Steuergerät mit einem maschinenlesbaren Programmcode sowie gegebenenfalls notwendiger Kennfelder zur Durchführung eines erfindungsgemäßen Verfahrens, wobei die katalytische Beschichtung auf dem Partikelfilter als ein Drei-Wege-katalytisch wirksamer Washcoat ausgeführt ist. Ein Vier-Wege-Katalysator, also ein Partikelfilter mit einer Drei-Wege-katalytisch wirksamen Beschichtung, ist ein Bauteil, welches in der Abgasnachbehandlung von fremdgezündeten Verbrennungsmotoren zunehmend Verwendung findet. Daher ist es bei einem solchen Bauteil wichtig, nicht nur die Funktionsfähigkeit des Partikelfilters sicherzustellen, sondern auch die Funktionsfähigkeit der katalytischen Beschichtung.

In einer bevorzugter Ausgestaltung der Erfindung ist vorgesehen, dass die Sekundärluftversorgung eine elektrisch angetriebene Sekundärluftpumpe umfasst. Eine elektrisch kommutierte Sekundärluftpumpe bietet den Vorteil, dass die Sekundärluftpumpe bedarfsgerecht zu- und abgeschaltet werden kann. Dadurch kann der zusätzliche Energiebedarf für die Sekundärluft gering gehalten werden und eine für Diagnosezwecke hinreichende Sekundärluftmenge in den Abgaskanal eingebracht werden. Zudem kann die Sekundärluftpumpe zur Unterstützung der Regeneration des Partikelfilters genutzt werden.

Gemäß einer vorteilhaften Weiterbildung der Erfindung ist vorgesehen, dass stromabwärts der Einmündung und stromaufwärts des Partikelfilters eine erste Lambdasonde und stromabwärts des Partikelfilters eine zweite Lambdasonde im Abgaskanal angeordnet ist. Durch eine Lambdasonde stromaufwärts und eine weitere Lambdasonde stromabwärts des Partikelfilters kann der Sauerstoffgehalt des Abgases vor und nach dem Partikelfilter bestimmt werden. Dadurch ist es besonders einfach, die Sauerstoffspeicherfähigkeit des Partikelfilters zu ermitteln.

In einer weiteren Verbesserung der Erfindung ist vorgesehen, dass der Partikelfilter in einer motorfernen Position, vorzugsweise in einer Unterbodenlage eines Kraftfahrzeuges, angeordnet ist. Unter einer motorfernen Position ist in diesem Zusammenhang eine Position mit einer Abgaslauflänge von mindestens 80 cm, vorzugsweise von mindestens 100 cm, nach einem Auslass des Verbrennungsmotors zu verstehen. Um eine besonders effiziente Abgasnachbehandlung zu ermöglich, kann der Partikelfilter mit der Drei-Wege-katalytischen wirksamen Beschichtung als zusätzlicher Katalysator insbesondere bei hohen Abgasgeschwindigkeiten und großen Abgasvolumina als zusätzlicher Katalysator die im Abgas vorhandenen Schadstoffe wie unverbrannte Kohlenwasserstoffe (HC), Kohlenstoffmonoxid (CO), oder Stickoxide (NOx) in unschädliche Abgaskomponenten konvertieren. Dabei ist insbesondere eine Kombination eines motornahen, kleinvolumigen Drei-Wege-Katalysators und eines großvolumigen Vier-Wege-Katalysators in Unterbodenlage sinnvoll, da sich der kleine Drei-Wege-Katalysator in einer Startphase besonders schnell aufheizt und somit bereits kurze Zeit nach einem Kaltstart des Verbrennungsmotors hohe Konvertierungsraten ermöglicht, während der Vier-Wege-Katalysator entsprechend großvolumig ausgestaltet werden kann und somit sowohl als Partikelfilter als auch als Katalysator entsprechend hohe Kapazitäten bereitstellen kann. Zudem altert ein Vier-Wege-Katalysator in Unterbodenlage in der Regel langsamer als ein motornaher Katalysator, sodass auch eine effiziente Abgasreinigung über die Lebensdauer des Kraftfahrzeuges gewährleistet werden kann. Zusätzlich kann die Sekundärluftpumpe genutzt werden, um den Partikelfilter mit der katalytischen Beschichtung nach einem Kaltstart schneller auf eine Betriebstemperatur zu bringen, bei der Schadstoffe effizient auf der katalytischen Beschichtung umgesetzt werden.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen Verbrennungsmotor mit einer erfindungsgemäßen Vorrichtung zur Abgasnachbehandlung,
- Figur 2: einen Abgaskanal eines erfindungsgemäßen Verbrennungsmotors,
- Figur 3: ein Verfahrensschaubild zum Ablauf eines erfindungsgemäßen Diagnoseverfahrens, und
- Figur 4: ein schematisches Diagramm zur Veranschaulichung des Verbrennungsluftverhältnisses sowie des Abgasluftverhältnisses während der einzelnen Phasen eines erfindungsgemäßen Diagnoseverfahrens.

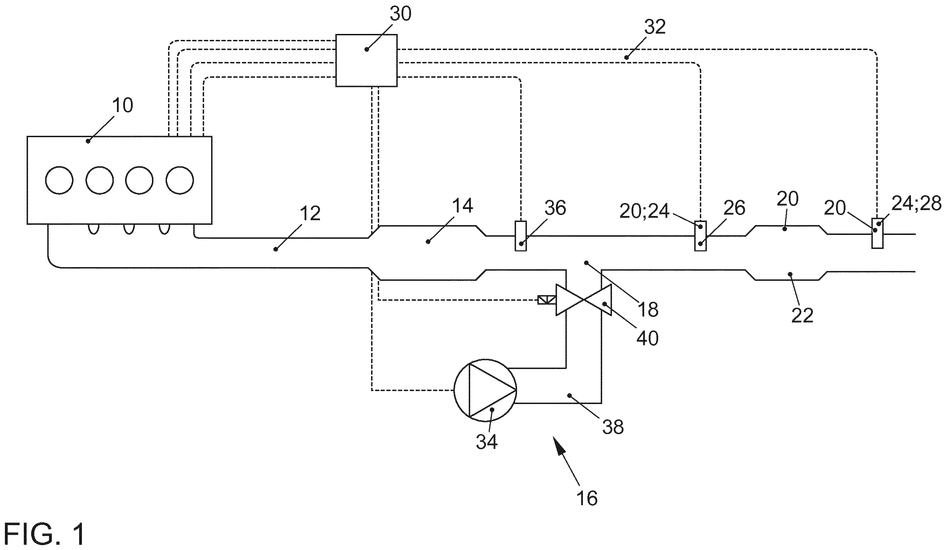

Figur 1 zeigt einen Verbrennungsmotor 10 für ein Kraftfahrzeug, mit einem Abgaskanal 12 sowie einem im Abgaskanal 12 angeordneten Drei-Wege-Katalysator 14. Der Verbrennungsmotor 10 ist vorzugsweise als fremdgezündeter Verbrennungsmotor 10 nach dem Ottoprinzip ausgeführt. In Strömungsrichtung eines Abgases stromabwärts des Drei-Wege-Katalysators 14 ist eine Einmündung 18 vorgesehen, an welcher mittels einer Sekundärluftversorgung 16 Sekundärluft in den Abgaskanal 12 des Verbrennungsmotors 10 eingebracht werden kann. Stromabwärts der Einmündung 18 sind weitere Komponenten 20 zur Abgasnachbehandlung, insbesondere ein Partikelfilter 22 mit einer Drei-Wege-katalytisch wirksamen Beschichtung sowie Lambdasonden 26, 28 zur Regelung des Sauerstoffgehalts im Abgaskanal 12 des Verbrennungsmotors 10, angeordnet. Die Lambdasonden 26, 28 sind über Signalleitungen 32 mit einem Steuergerät 30 des Verbrennungsmotors 10 verbunden.

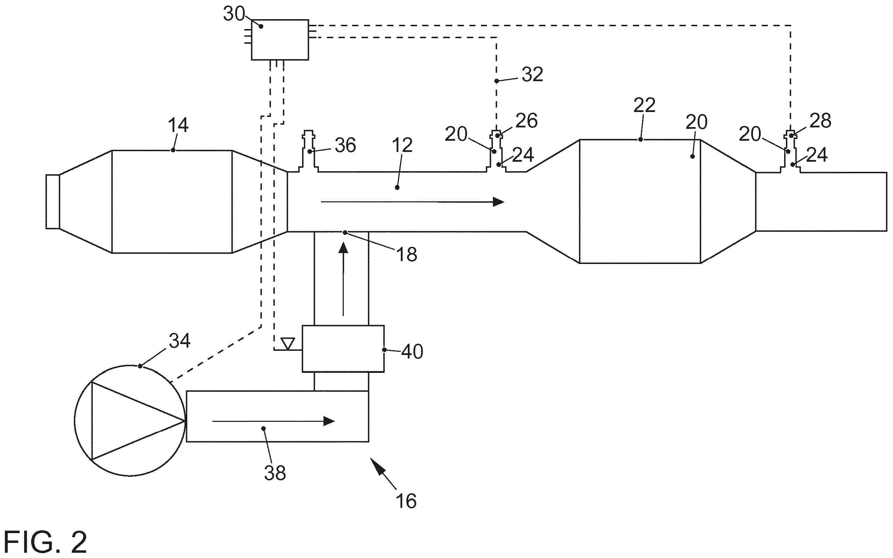

In Figur 2 ist der Abgaskanal 12 des Verbrennungsmotors 10 nochmals dargestellt. Im Abgaskanal 12 ist stromabwärts des ersten Drei-Wege-Katalysators 14 eine weitere Lambdasonde 36 angeordnet, mit der das Verbrennungsluftverhältnis des Verbrennungsmotors 10 geregelt wird. Die Sekundärluftversorgung 16 umfasst eine Sekundärluftleitung 38, in der eine elektrisch kommutierte Sekundärluftpumpe 34 angeordnet ist. Zwischen der Sekundärluftpumpe 34 und der Einmündung 18 der Sekundärluftleitung 38 in den Abgaskanal 12 ist ein Absperrventil 40 angeordnet, mit der ein Rückströmen von Abgas aus dem Abgaskanal 12 in Richtung der Sekundärluftpumpe 34 unterbunden werden kann. Zur Regelung des Sauerstoffgehalts im Abgaskanal 12 ist stromaufwärts des Partikelfilters 22 eine erste Lambdasonde 26 und stromabwärts des Partikelfilters 22 eine zweite Lambdasonde 28 angeordnet. In einer einfachen Ausführungsvariante kann die erste Lambdasonde 26 stromaufwärts des Partikelfilters 22 entfallen.

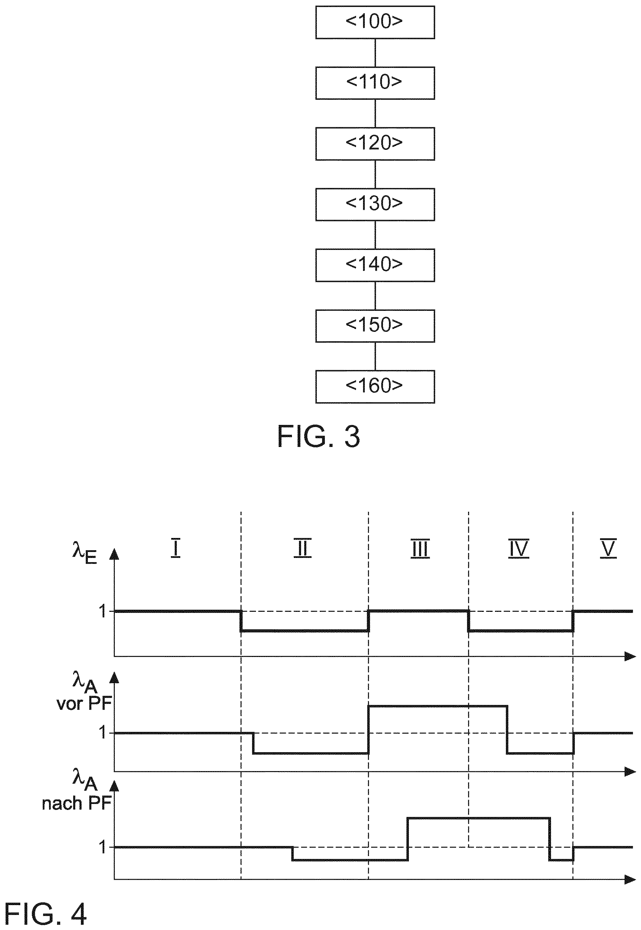

In Figur 3 ist ein Verfahrensschaubild zum Ablauf eines erfindungsgemäßen Diagnoseverfahrens dargestellt. Im Normalbetrieb <100> wird der Verbrennungsmotor 10 mit einem im Wesentlichen stöchiometrischen Verbrennungsluftverhältnis λ_{E} = 1 betrieben. Dabei wird das Abgas durch den ersten Drei-Wege-Katalysator 14 und den katalytisch beschichteten Partikelfilter 22 gereinigt. Im Normalbetrieb <100> ist die Sekundärluftpumpe 34 abgeschaltet und das Absperrventil 40 geschlossen. Für die Durchführung des Diagnoseverfahrens wird nun in einem nächsten Verfahrensschritt <120> mithilfe der Sekundärluftpumpe 34 in den Abgaskanal 12 des Verbrennungsmotors 10 eingebracht. Der Betrieb mit Sekundärluft erfolgt als Konditionierungsphase so lange, bis die zweite Lambdasonde 28 stromabwärts des Partikelfilters 22 einen Luftüberschuss erkennt. In dieser Phase wird der Verbrennungsmotor 10 weiterhin mit einem stöchiometrischen Verbrennungsluftverhältnis betrieben, sodass zumindest der erste Drei-Wege-Katalysator 14 mit einem stöchiometrischen Abgas beaufschlagt wird und eine effiziente Konvertierung der HC-, CO- und NOx-Emissionen ermöglicht. Erkennt die zweite Lambdasonde 28 stromabwärts des Partikelfilters 22 einen Sauerstoffdurchbruch, wird die Sekundärluftpumpe 34 in einem nächsten Verfahrensschritt <130> abgeschaltet, das Absperrventil 40 geschlossen und der Verbrennungsmotor 10 mit einem unterstöchiometrischen Verbrennungsluft betrieben. Dabei wird zunächst der im ersten Drei-Wege-Katalysator 14 gespeicherte Sauerstoff und zeitlich versetzt der im Partikelfilter 22 gespeicherte Sauerstoff ausgeräumt, bis ein Fettdurchbruch an der zweiten Lambdasonde 28 stromabwärts des Partikelfilters 22 gemessen wird. Dabei kann in einem Verfahrensschritt <140> durch die erste Lambdasonde 26 zwischen der Einmündung 18 der Sekundärluftleitung 38 oder durch die weitere Lambdasonde 36 ermittelt werden, wann es zu einem Fettdurchbruch durch den ersten Drei-Wege-Katalysator 14 kommt und wann das Ausräumen des im Partikelfilter 22 gespeicherten Sauerstoffs beginnt.

Durch eine Auswertung der überstöchiometrischen Sauerstoffmassenströme und der unterstöchiometrischen Sauerstoffmassenströme kann in einem weiteren Verfahrensschritt <150> eine Bewertung der Sauerstoffspeicherfähigkeit (OSC) beziehungsweise Sauerstoffaustragungsfähigkeit (RSC) des Partikelfilters erfolgen. Ferner kann in einem weiteren Verfahrensschritt <160> der Signalgradient an der ersten Lambdasonde 26 beziehungsweise der zweiten Lambdasonde 28 bei einem Wechsel von unterstöchiometrischem Abgas zu überstöchiometrischem Abgas gemessen werden und daraus auf eine Funktionsfähigkeit der Lambdasonden 26, 28 geschlossen werden. Zur Diagnose der katalytischen Beschichtung des Partikelfilters 22 und der Lambdasonden 26, 28 kann entweder die Sekundärlufteinbringung beim Aufheizen des Partikelfilters 22 zur Oxidation der darin zurückgehaltenen Rußpartikel genutzt werden oder die Sekundärluftpumpe 34 speziell nur für die Diagnose aktiviert werden. Alternativ kann die Sekundärlufteinbringung auch im Anschluss an eine Regeneration des Partikelfilters 22 verlängert werden, bis die Diagnose des Partikelfilters 22 beziehungsweise der Lambdasonden 26, 28 beendet ist. Ist die Diagnose der Funktionsfähigkeit des Partikelfilters 22 beziehungsweise der Lambdasonde 26, 28 abgeschlossen, wird der Verbrennungsmotor 10 anschließend in einem Verfahrensschritt <160> wieder im Normalbetrieb mit stöchiometrischem Verbrennungsluftverhältnis und abgeschalteter Sekundärlufteinbringung betrieben.

Um eine möglichst ungestörte Diagnose des Partikelfilters 22 und/oder der Lambdasonden 26, 28 durchführen zu können, kann es vorteilhaft sein, wenn der Verbrennungsmotor 10 zwischen dem stöchiometrischen Normalbetrieb und dem Start der Sekundärluftversorgung kurzfristig in einem zwischengeschalteten Verfahrensschritt <110> mit einem unterstöchiometrischen Verbrennungsluftverhältnis betrieben wird, um die Sauerstoffspeicher im ersten Drei-Wege-Katalysator 14 und im Partikelfilter 22 komplett auszuräumen und auf diese Weise für eine Vorkonditionierung der Katalysatoren 14, 22 zu sorgen.

In Figur 4 sind das Verbrennungsluftverhältnis λ_{E} des Verbrennungsmotors 10 sowie das Abgasluftverhältnis stromaufwärts des Partikelfilters 22 (an der Position der ersten Lambdasonde 26) sowie stromabwärts des Partikelfilters 22 (an der Position der zweiten Lambdasonde 28) dargestellt. Im Normalbetrieb I wird der Verbrennungsmotor 10 mit einem stöchiometrischen Verbrennungsluftverhältnis λ_{E} = 1 betrieben und es herrscht im Abgaskanal 12 stromaufwärts des Partikelfilters 22 und stromabwärts des Partikelfilters 22 ein stöchiometrisches Abgas λ_{A} = 1. In der Vorkonditionierungsphase II wird der Verbrennungsmotor 10 mit einem unterstöchiometrischen Verbrennungsluftverhältnis λ_{E} < 1 betrieben, wodurch sich, bedingt durch die Sauerstoffspeicherfähigkeit des ersten Drei-Wege-Katalysators 14, zeitverzögert im Abgaskanal 12 stromaufwärts des Partikelfilters 22 ein unterstöchiometrisches Abgas λ_{A} < 1 und nochmals zeitverzögert auch stromabwärts des Partikelfilters 22 ein unterstöchiometrisches Abgas λ_{A} < 1 einstellt. Wird an der zweiten Lambdasonde 28 ein unterstöchiometrisches Abgas detektiert, wird der Verbrennungsmotor 10 in Phase III wieder mit einem stöchiometrischen Verbrennungsluftverhältnis λ_{E} = 1 betrieben und die Sekundärlufteinbringung aktiviert. Dabei stellt sich zunächst im Abgaskanal 12 stromaufwärts des Partikelfilters 22 ein überstöchiometrisches Abgas λ_{A} > 1 und entsprechend der Sauerstoffspeicherfähigkeit (OSC) des Partikelfilters 22 zeitverzögert ein überstöchiometrisches Abgas λ_{A} > 1 stromabwärts des Partikelfilters 22 ein. Wird an der zweiten Lambdasonde 28 ein überstöchiometrisches Abgas λ_{A} > 1 gemessen, wird die Sekundärlufteinbringung wieder abgestellt und der Verbrennungsmotor 10 in der Phase IV mit einem unterstöchiometrischen Verbrennungsluftverhältnis λ_{E} < 1 betrieben. Dabei stellt sich im Abgaskanal 12 stromaufwärts des Partikelfilters 22 ein unterstöchiometrisches Abgas λ_{A} < 1 und zeitverzögert, entsprechend der Sauerstoffaustragungsfähigkeit (RSC) des Partikelfilters 22, auch stromabwärts des Partikelfilters 22 ein unterstöchiometrisches Abgas λ_{A} < 1 ein. In einer Phase V ist das Diagnoseverfahren abgeschlossen und der Verbrennungsmotor 10 wird wieder mit einem stöchiometrischen Verbrennungsluftverhältnis λ_{E} = 1 betrieben, wobei sich ein stöchiometrisches Abgas λ_{A} = 1 im Abgaskanal 12 einstellt.

### Bezugszeichenliste

- 10: Verbrennungsmotor
- 12: Abgaskanal
- 14: Drei-Wege-Katalysator
- 16: Sekundärluftversorgung
- 18: Einmündung
- 20: Komponente
- 22: Partikelfilter mit katalytischer Beschichtung
- 24: Sonde
- 26: erste Lambdasonde
- 28: zweite Lambdasonde
- 30: Steuergerät
- 32: Signalleitung
- 34: Sekundärluftpumpe
- 36: weitere Lambdasonde
- 38: Sekundärluftleitung
- 40: Absperrventil
- λ_{E}: Verbrennungsluftverhältnis
- λ_{A}: Abgasluftverhältnis

## Patentansprüche

1. Diagnoseverfahren zur Überprüfung der Funktionsfähigkeit eines Partikelfilter (22) mit einer katalytisch wirksamen Beschichtung zur Abgasnachbehandlung eines Verbrennungsmotors (10) in einem Abgaskanal (12) des Verbrennungsmotors (10), wobei der Partikelfilter (22) im Abgaskanal (12) stromabwärts eines Drei-Wege-Katalysators (14) angeordnet ist, umfassend folgende Schritte:
- Betreiben des Verbrennungsmotors (10) mit einem stöchiometrischen Verbrennungsluftverhältnis λ_{E} = 1, wobei das Abgas des Verbrennungsmotors (10) durch den Abgaskanal (12) geleitet und der Partikelfilter (22) mit der katalytisch wirksamen Beschichtung mit einem stöchiometrischen Abgas λ_{A} = 1 beaufschlagt wird,
- Beaufschlagung des Partikelfilters (22) mit der katalytisch wirksamen Beschichtung mit einem überstöchiometrischen Abgas λ_{A} > 1, wobei der Verbrennungsmotor (10) mit einem stöchiometrischen Verbrennungsluftverhältnis λ_{E} = 1 betrieben wird und zusätzliche Sekundärluft stromabwärts des Drei-Wege-Katalysators (14) und stromaufwärts des Partikelfilters (22) in den Abgaskanal (12) eingeblasen wird,
- Ermitteln einer Reaktion des Partikelfilters (22) auf ein überstöchiometrisches Abgas,
- Betreiben des Verbrennungsmotors (10) mit einem unterstöchiometrischen Verbrennungsluftverhältnis λ_{E} < 1, wobei sich an dem Partikelfilter (22) ebenfalls ein unterstöchiometrisches Abgas λ_{A} < 1 einstellt.
- Ermitteln einer Reaktion des Partikelfilters (22) auf ein unterstöchiometrisches Abgas, wobei
- bei der Beaufschlagung des Partikelfilters (22) mit einem überstöchiometrischen Abgas die Sauerstoffspeicherfähigkeit (OSC) des Partikelfilters (22) bestimmt wird und wobei
- beim unterstöchiometrischen Betrieb des Verbrennungsmotors (10) eine Sauerstoffaustragungsfähigkeit (RSC) aus dem Partikelfilter (22) bestimmt wird.

2. Diagnoseverfahren nach Anspruch 1, **dadurch gekennzeichnet, dass** die Sekundärluft solange in den Abgaskanal (12) eingeblasen wird, bis an einer Sonde (24) stromabwärts des Partikelfilters (22) ein überstöchiometrisches Abgas gemessen wird.

3. Diagnoseverfahren nach Anspruch 1 oder 2, **dadurch gekennzeichnet, dass** der Verbrennungsmotor (10) unmittelbar nach einem Detektieren eines Sauerstoffdurchbruchs stromabwärts des Partikelfilters (22) auf einen Betrieb des Verbrennungsmotors (10) mit einem unterstöchiometrischen Verbrennungsluftverhältnis umgeschaltet wird.

4. Diagnoseverfahren nach Anspruch 2 oder 3, **dadurch gekennzeichnet, dass** die Sekundärlufteinbringung in den Abgaskanal (12) gestoppt wird, sobald an der Sonde (24) stromabwärts des Partikelfilters (22) ein Sauerstoffdurchbruch ermittelt wird.

5. Diagnoseverfahren nach einem der Ansprüche 1 bis 4, **dadurch gekennzeichnet, dass** eine Bewertung der Funktionsfähigkeit der katalytischen Beschichtung des Partikelfilters (22) anhand einer Integration der Abgasströme während des Betriebs des Verbrennungsmotors (10) mit unterstöchiometrischem Abgas und mit überstöchiometrischem Abgas erfolgt.

6. Diagnoseverfahren nach einem der Ansprüche 1 bis 5, **dadurch gekennzeichnet, dass** der Partikelfilter (22) vor dem Einbringen der Sekundärluft durch einen Betrieb des Verbrennungsmotors (10) mit einem unterstöchiometrischen, fetten Verbrennungsluftverhältnis λ_{E} < 1 vorkonditioniert wird.

7. Steuergerät (30) mit einem maschinenlesbaren Programmcode sowie gegebenenfalls erforderlichen Kennfelder, welches eingerichtet ist, ein Verfahren nach einem der Ansprüche 1 bis 6 durchzuführen.

8. Vorrichtung zur Abgasnachbehandlung eines Verbrennungsmotors (10), umfassend einen Abgaskanal (12), einen im Abgaskanal (12) angeordneten Drei-Wege-Katalysator (14) sowie einen stromabwärts des Drei-Wege-Katalysators (14) angeordneten Partikelfilter (22) mit einer katalytisch wirksamen Beschichtung, sowie eine stromabwärts des Partikelfilters (22) angeordnete Lambdasonde (28), wobei stromabwärts des Drei-Wege-Katalysators (14) und stromaufwärts des Partikelfilters (22) eine Einmündung (18) einer Sekundärluftversorgung (16) in den Abgaskanal (12) des Verbrennungsmotors (10) vorgesehen ist, sowie mit einem Steuergerät (30) mit einem Programmcode zur Durchführung eines Verfahrens nach einem der Ansprüche 1 bis 6, **dadurch gekennzeichnet, dass** die katalytische Beschichtung auf dem Partikelfilter (22) als ein Drei-Wege-wirksamer katalytischer Washcoat ausgeführt ist.

9. Vorrichtung zur Abgasnachbehandlung nach Anspruch 8, **dadurch gekennzeichnet, dass** die Sekundärluftversorgung (16) eine Sekundärluftpumpe (34) umfasst, welche elektrisch angetrieben ist.

10. Vorrichtung zur Abgasnachbehandlung nach Anspruch 8 oder 9, **dadurch gekennzeichnet, dass** stromabwärts der Einmündung (18) und stromaufwärts des Partikelfilters (22) eine erste Lambdasonde (26) und stromabwärts des Partikelfilters (22) eine zweite Lambdasonde (28) im Abgaskanal (12) angeordnet ist.

11. Vorrichtung zur Abgasnachbehandlung nach einem der Ansprüche 8 bis 10, **dadurch gekennzeichnet, dass** der Partikelfilter (22) in einer motorfernen Position angeordnet ist.

## Claims

1. Diagnostic method for checking the functionality of a particle filter (22) with a catalytically active coating for the exhaust-gas aftertreatment of an internal combustion engine (10) in an exhaust-gas duct (12) of the internal combustion engine (10), wherein the particle filter (22) is arranged in the exhaust-gas duct (12) downstream of a three-way catalytic converter (14), comprising the following steps:
- operating the internal combustion engine (10) with a stoichiometric combustion air ratio λ_{E} = 1, wherein the exhaust gas of the internal combustion engine (10) is conducted through the exhaust-gas duct (12) and the particle filter (22) with the catalytically active coating is subjected to a stoichiometric exhaust gas λ_{A} = 1,
- subjecting the particle filter (22) with the catalytically active coating to a superstoichiometric exhaust gas λ_{A} > 1, wherein the internal combustion engine (10) is operated with a stoichiometric combustion air ratio λ_{E} = 1 and additional secondary air is injected into the exhaust-gas duct (12) downstream of the three-way catalytic converter (14) and upstream of the particle filter (22),
- ascertaining a reaction of the particle filter (22) to a superstoichiometric exhaust gas,
- operating the internal combustion engine (10) with a substoichiometric combustion air ratio λ_{E} < 1, with a substoichiometric exhaust gas λ_{A} < 1 likewise prevailing at the particle filter (22),
- ascertaining a reaction of the particle filter (22) to a substoichiometric exhaust gas, wherein
- during the subjecting of the particle filter (22) to a superstoichiometric exhaust gas, the oxygen storage capacity (OSC) of the particle filter (22) is determined, and wherein
- during the substoichiometric operation of the internal combustion engine (10), an oxygen release capacity (RSC) from the particle filter (22) is determined.

2. Diagnostic method according to Claim 1, **characterized in that** the secondary air is injected into the exhaust-gas duct (12) until such time as a superstoichiometric exhaust gas is measured at a probe (24) downstream of the particle filter (22).

3. Diagnostic method according to Claim 1 or 2, **characterized in that**, immediately after the detection of an oxygen breakthrough downstream of the particle filter (22), the internal combustion engine (10) is switched to operation of the internal combustion engine (10) with a substoichiometric combustion air ratio.

4. Diagnostic method according to Claim 2 or 3, **characterized in that** the introduction of secondary air into the exhaust-gas duct (12) is stopped as soon as an oxygen breakthrough is ascertained at the probe (24) downstream of the particle filter (22).

5. Diagnostic method according to any of Claims 1 to 4, **characterized in that** an evaluation of the functionality of the catalytic coating of the particle filter (22) is performed on the basis of an integration of the exhaust-gas flows during the operation of the internal combustion engine (10) with substoichiometric exhaust gas and with superstoichiometric exhaust gas.

6. Diagnostic method according to any of Claims 1 to 5, **characterized in that**, before the introduction of the secondary air, the particle filter (22) is preconditioned by means of operation of the internal combustion engine (10) with a substoichiometric, rich combustion air ratio λ_{E} < 1.

7. Control unit (30) with a machine-readable program code and possibly required characteristic maps, which control unit is configured to carry out a method according to any of Claims 1 to 6.

8. Device for the exhaust-gas aftertreatment of an internal combustion engine (10), comprising an exhaust-gas duct (12), a three-way catalytic converter (14) which is arranged in the exhaust-gas duct (12) and a particle filter (22) which is arranged downstream of the three-way catalytic converter (14) and which has a catalytically active coating, and a lambda probe (28) arranged downstream of the particle filter (22), wherein an opening (18) of a secondary air supply (16) into the exhaust-gas duct (12) of the internal combustion engine (10) is provided downstream of the three-way catalytic converter (14) and upstream of the particle filter (22), and with a control unit (30) with a program code for carrying out a method according to any of Claims 1 to 6, **characterized in that** the catalytic coating on the particle filter (22) is formed as a washcoat with three-way catalytic action.

9. Device for exhaust-gas aftertreatment according to Claim 8, **characterized in that** the secondary air supply (16) comprises a secondary air pump (34) which is electrically driven.

10. Device for exhaust-gas aftertreatment according to Claim 8 or 9, **characterized in that** a first lambda probe (26) is arranged in the exhaust-gas duct (12) downstream of the opening (18) and upstream of the particle filter (22) and a second lambda probe (28) is arranged in the exhaust-gas duct (12) downstream of the particle filter (22).

11. Device for exhaust-gas aftertreatment according to any of Claims 8 to 10, **characterized in that** the particle filter (22) is arranged in a position remote from the engine.

## Revendications

1. Procédé de diagnostic pour contrôler l'aptitude au fonctionnement d'un filtre à particules (22) doté d'un revêtement catalytiquement actif servant au post-traitement des gaz d'échappement d'un moteur à combustion interne (10) dans un conduit de gaz d'échappement (12) du moteur à combustion interne (10), le filtre à particules (22) étant disposé dans le conduit de gaz d'échappement (12) en aval d'un catalyseur à trois voies (14), comprenant les étapes suivantes :
- mise en fonctionnement du moteur à combustion interne (10) avec un rapport d'air de combustion stœchiométrique λ_{E} = 1, les gaz d'échappement du moteur à combustion interne (10) étant conduits à travers le conduit de gaz d'échappement (12) et le filtre à particules (22) doté du revêtement catalytiquement actif étant alimenté avec des gaz d'échappement stœchiométriques λ_{A} = 1,
- alimentation du filtre à particules (22) doté du revêtement catalytiquement actif avec des gaz d'échappement surstœchiométriques λ_{A} > 1, le moteur à combustion interne (10) fonctionnant avec un rapport d'air de combustion stœchiométrique λ_{E} = 1 et de l'air secondaire étant en plus insufflé dans le conduit de gaz d'échappement (12) en aval du catalyseur à trois voies (14) et en amont du filtre à particules (22),
- identification d'une réaction du filtre à particules (22) à des gaz d'échappement surstœchiométriques,
- mise en fonctionnement du moteur à combustion interne (10) avec un rapport d'air de combustion sous-stœchiométrique λ_{E} < 1, des gaz d'échappement sous-stœchiométriques λ_{A} < 1 s'établissant également au niveau du filtre à particules (22),
- identification d'une réaction du filtre à particules (22) à des gaz d'échappement sous-stœchiométriques,
- la capacité à l'accumulation d'oxygène (OSC) du filtre à particules (22) étant déterminée lors de l'alimentation du filtre à particules (22) avec des gaz d'échappement surstœchiométriques et
- une capacité de décharge d'oxygène (RSC) hors du filtre à particules (22) étant déterminée lors du fonctionnement sous-stœchiométrique du moteur à combustion interne (10).

2. Procédé de diagnostic selon la revendication 1, **caractérisé en ce que** l'air secondaire est insufflé dans le conduit de gaz d'échappement (12) jusqu'à ce que des gaz d'échappement surstœchiométriques soient mesurés au niveau d'une sonde (24) en aval du filtre à particules (22).

3. Procédé de diagnostic selon la revendication 1 ou 2, **caractérisé en ce que** le moteur à combustion interne (10) est permuté sur un fonctionnement du moteur à combustion interne (10) avec un rapport d'air de combustion sous-stœchiométrique immédiatement après une détection d'une irruption d'oxygène en aval du filtre à particules (22).

4. Procédé de diagnostic selon la revendication 2 ou 3, **caractérisé en ce que** l'apport d'air secondaire dans le conduit de gaz d'échappement (12) est stoppé dès qu'une irruption d'oxygène est identifiée au niveau de la sonde (24) en aval du filtre à particules (22).

5. Procédé de diagnostic selon l'une des revendications 1 à 4, **caractérisé en ce qu'**une évaluation de l'aptitude au fonctionnement du revêtement catalytique du filtre à particules (22) est effectuée à l'aide d'une intégration des flux de gaz d'échappement pendant un fonctionnement du moteur à combustion interne (10) avec des gaz d'échappement sous-stœchiométriques et avec des gaz d'échappement surstœchiométriques.

6. Procédé de diagnostic selon l'une des revendications 1 à 5, **caractérisé en ce que** le filtre à particules (22), avant l'apport de l'air secondaire, est préconditionné par un fonctionnement du moteur à combustion interne (10) avec un rapport d'air de combustion sous-stœchiométrique gras λ_{E} < 1.

7. Contrôleur (30) comprenant un code de programme lisible par machine et éventuellement les diagrammes caractéristiques nécessaires, lequel est conçu pour mettre en œuvre un procédé selon l'une des revendications 1 à 6.

8. Dispositif de post-traitement des gaz d'échappement d'un moteur à combustion interne (10), comprenant un conduit de gaz d'échappement (12), un catalyseur à trois voies (14) disposé dans le conduit de gaz d'échappement (12) ainsi qu'un filtre à particules (22) doté d'un revêtement catalytiquement actif disposé en aval du catalyseur à trois voies (14), ainsi qu'une sonde lambda (28) disposée en aval du filtre à particules (22), une embouchure (18) d'une alimentation en air secondaire (16) se trouvant dans le conduit de gaz d'échappement (12) du moteur à combustion interne (10) en aval du catalyseur à trois voies (14) ainsi qu'en amont du filtre à particules (22), comprenant également un contrôleur (30) comprenant un code de programme pour mettre en œuvre un procédé selon l'une des revendications 1 à 6, **caractérisé en ce que** le revêtement catalytique sur le filtre à particules (22) est réalisé sous la forme d'une enduction catalytique agissant sur trois voies.

9. Dispositif de post-traitement des gaz d'échappement selon la revendication 8, **caractérisé en ce que** l'alimentation en air secondaire (16) comporte une pompe à air secondaire (34) qui est entraînée électriquement.

10. Dispositif de post-traitement des gaz d'échappement selon la revendication 8 ou 9, **caractérisé en ce qu'**une première sonde lambda (26) est disposée dans le conduit de gaz d'échappement (12) en aval de l'embouchure (18) et en amont du filtre à particules (22) et une deuxième sonde lambda (28) en aval du filtre à particules (22).

11. Dispositif de post-traitement des gaz d'échappement selon l'une des revendications 8 à 10, **caractérisé en ce que** le filtre à particules (22) est disposé dans une position éloignée du moteur.
